(19) Europäisches Patentamt
European Patent Office
Office européen des brevets

(11) **EP 3 085 477 A1**

(12) **EUROPÄISCHE PATENTANMELDUNG**

(43) Veröffentlichungstag:
26.10.2016 Patentblatt 2016/43

(51) Int Cl.:
*B23B 5/36* (2006.01)    *B23Q 27/00* (2006.01)

(21) Anmeldenummer: **15164505.8**

(22) Anmeldetag: **21.04.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Heinrichs & Co. KG**
**56290 Dommershausen-Dorweiler (DE)**

(72) Erfinder: **Heinrichs, Florian**
**56290 Dommershausen-Dorweiler (DE)**

(74) Vertreter: **König Szynka Tilmann von Renesse**
**Patentanwälte Partnerschaft mbB**
**Machtlfinger Strasse 9**
**81379 München (DE)**

(54) **VERFAHREN UND VORRICHTUNG ZUM SCHLAGDREHEN**

(57) Die Erfindung betrifft ein Verfahren und eine Vorrichtung zum Schlagdrehen, wobei das Verhältnis der Rotationsgeschwindigkeiten des Werkstücks und des Werkzeugs zeitlich variiert wird.

EP 3 085 477 A1

## Beschreibung

Die vorliegende Erfindung betrifft ein Verfahren und eine entsprechende Vorrichtung zum Schlagdrehen von Werkstücken mit einem Werkzeug.

Das Schlagdrehen ist ein seit vielen Jahrzehnten bekanntes Verfahren zur spanabhebenden Bearbeitung von Werkstücken, insbesondere Metallen. Mit diesem Verfahren zielt man auf Querschnittsprofile, die nicht kreisförmig sind und deswegen mit dem klassischen Drehen nicht hergestellt werden können.

Beim Schlagdrehen sorgt man für eine Relativbewegung zwischen einem spanabhebenden Werkzeug, im Folgenden als "Messer" bezeichnet und dem Werkstück, die man sich am einfachsten aus zwei Bewegungen zusammengesetzt vorstellt. (Die hierzu folgende Erläuterung gehört dabei schon zur Offenbarung der Erfindung selbst.) Am einfachsten bezieht man sich auf ein kinematisches Bezugsystem, gegenüber dem sich einerseits das Werkzeug und andererseits das Werkstück jeweils um eine eigene Achse drehen, wobei beide Achsen beabstandet sind. Dieses kinematische Bezugssystem ist nicht zwingend ortsfest. Es ist durchaus denkbar, zum Beispiel das Werkstück (oder auch das Werkzeug) feststehen zu lassen und das Werkzeug (oder auch das Werkstück) um eine Drehachse rotieren zu lassen, die sich ihrerseits um das feststehende Werkstück (oder Werkzeug) dreht.

Für die Bearbeitung, also die Relativbewegung zwischen Werkzeug und Werkstück, spielt das Bezugsystem keine Rolle und die Auswahl zwischen den verschiedenen Möglichkeiten kann im Einzelfall nach anderen als kinematischen Kriterien erfolgen, zum Beispiel nach Größe und Masse von Werkstück und Werkzeug, der jeweils notwendigen Drehvorrichtungen und natürlich nach dynamischen Aspekten. Die Bezugnahme auf "ein kinematisches Bezugsystem" soll im Folgenden und insbesondere in den Ansprüchen als dementsprechend offen verstanden werden, versteht sich also so, dass das kinematische Bezugsystem gegenüber der Umgebung (der Werkstatt) ortsfest sein kann, aber nicht sein muss.

Durch die Kopplung der beiden rotierenden Bewegungen kommt es einer besonderen Relativbewegung zwischen Werkzeug und Werkstück. Diese lässt sich in bestimmter Weise ausnutzen, und zwar im Stand der Technik zur Herstellung von Mehrkantprofilen, also zum Beispiel Sechskant-Schraubenköpfen. Für diesen Anwendungsfall kommt es insbesondere auf ein geeignetes Verhältnis der beiden Drehgeschwindigkeiten an. Der im Stand der Technik praktisch bedeutsame Fall sieht dabei vor, dass sich eine Werkzeugdreheinrichtung mit einer Mehrzahlmesser mit der doppelten Geschwindigkeit im Vergleich zur Drehgeschwindigkeit des Drehstücks dreht, wobei die Messerzahl multipliziert mit diesem Faktor 2 die Zahl der erzeugten Mehrkant-Planflächen ergibt, nämlich in den praktisch relevanten Fällen die Zahl 6. Zur Vereinfachung kann auf einen instruktiven Beitrag aus dem Stand der Technik verwiesen werden, nämlich auf die der Anmeldung beiliegende Veröffentlichung der Firma Index aus dem Jahr 1961: Fingerle, Rudolf "Das Mehrkantdrehen - Grundlagen und Problematik", Sonderdruck aus "Der Maschinenmarkt" 67. Jg. Nr. 28 vom April 1961.

Ergänzend bleibt festzustellen, dass die vorliegende Erfindung erstens nicht auf das Schlagdrehen von Mehrkantprofilen eingeschränkt ist, sondern das auch andere unrunde Querschnittsprofilen unter Ausnutzung einer solchen Kinematik hergestellt werden können. Zweitens soll die Erfindung nicht auf das Schlagdrehen im Sinn der spanabhebenden Bearbeitung, insbesondere mit Messern, beschränkt sein, sondern versteht den Begriff des Schlagdrehens lediglich als Referenz auf den Stand der Technik zu der zugrunde liegende Kinematik. Es ist zum Beispiel durchaus denkbar, gewünschte Querschnittsprofile auch mit einer abrasiven (schleifenden einschließlich polierenden) oder anderen Bearbeitungstechnik zu kombinieren. Drittens soll hier nicht diskutiert werden, inwieweit das Schlagdrehen ein Sonderfall des Drehens oder eine eigene Bearbeitungstechnik ist; in dem beiliegenden Stand der Technik wird mit guten Gründen eher Letzteres vertreten. Der Erfindung liegt das technische Problem zugrunde, ein hinsichtlich der Kinematik verbessertes Verfahren zum Schlagdrehen und eine entsprechende Vorrichtung anzugeben.

Dieses Problem wird gelöst durch ein Verfahren zum Schlagdrehen, bei dem ein Werkzeug in einem kinematischen Bezugssystem um eine erste Achse gedreht wird, gleichzeitig ein Werkstück in dem Bezugssystem um eine zweite, von der ersten Achse entfernte Achse gedreht wird, wobei das Werkzeug das Werkstück in bestimmten Kontaktphasen der sich aus der Kombination der beiden Drehbewegungen ergebenden Relativbewegung bearbeitet, dadurch gekennzeichnet, dass während der Bearbeitung das Betragsverhältnis der jeweils gleichzeitigen Drehgeschwindigkeiten der beiden Drehbewegungen innerhalb einer Wiederholungsperiode der sich aus der Kombination der Drehbewegungen ergebenden Relativbewegung nicht-monoton variiert, sowie durch eine entsprechend eingerichtete Vorrichtung.

Bevorzugte Ausgestaltungen sind Gegenstand der abhängigen Ansprüche und werden im Folgenden neben der Grundidee der Erfindung im Einzelnen erläutert. Die einzelnen Merkmale, auch des danach folgenden Ausführungsbeispiels, sind für alle denkbaren Anspruchskategorien relevant und können auch in anderen als den dargestellten Kombinationen erfindungswesentlich sein, allerdings grundsätzlich nur im Rahmen des geltenden Anspruchs 1.

Die Grundidee der Erfindung liegt darin, das numerische Verhältnis (Betragsverhältnis) zwischen den beiden Drehgeschwindigkeiten der beiden erläuterten Drehbewegungen zu variieren. Der Stand der Technik geht, wie sich am Beispiel des zitierten Dokuments zum Mehrkantdrehen zeigt, grundsätzlich von einem konstanten Betragsverhältnis zwischen den beiden Drehgeschwindigkeiten aus, im Regelfall von einem Verhältnis von 2. Zu einem wesentlichen Teil liegt dem zugrunde, dass bei der klassischen Anwendung zur Herstellung von regelmäßigen Mehrkantprofilen (vgl. in der zitierten Veröffentlichung Seite 4, links oben Tabelle 1 und darunter Tabelle 2) die Messerzahl multipliziert mit dem Betragsverhältnis die Kantenzahl ergab, also zum Beispiel bei einem Sechskant mit drei Messern und der doppelten Werkzeuggeschwindigkeit im Vergleich zur Werkstückgeschwindigkeit gearbeitet wurde. Damit bearbeitet jedes Messer eine dem Betragsverhältnis entsprechende Zahl von Kanten.

Der Erfinder der vorliegenden Anmeldung hat allerdings erkannt, dass sich die Genauigkeit der Annäherung an ein gewünschtes Profil, insbesondere (aber nicht zwingend) die Genauigkeit der Annäherung an eine plane Fläche bzw. gerade Profilkante, erheblich steigern lässt, wenn je nach gewünschtem Einzelfall von einem (im Sinn des Standes der Technik) idealisierten Betragsverhältnis, also zum Beispiel 2, abgewichen wird.

Man kann zum Beispiel von der Formel 8 in der beiliegenden Veröffentlichung (dort auf Seite 2) ausgehen, also von

$$\frac{a}{r} \approx \left(\frac{n2}{n1} - 1\right)^2.$$

Die angedeutete Näherung ergibt sich aus der in der zitierten Quelle zuvor vorgenommenen Linearisierung nach dem üblichen Schema $\sin(x) \approx x$ für kleine $x$. Für die Drehzahl $n_2$ des Messerkopfs bzw. der Werkzeuge im Verhältnis zu Drehzahl $n_1$ des Werkstücks, also für das Betragsverhältnis, verwenden wir $i$

$$\frac{n2}{n1} = i.$$

Mit der Abkürzung SW für die Schlüsselweite des zu fertigenden Mehrkantprofils und der Abkürzung MK für den Durchmesser des Messerkopfs bzw. Werkzeugkopfs (und zwar bis zur für die Bearbeitung relevanten Werkzeugkante) ergibt sich ferner

$$a = \frac{SW}{2} + \frac{MK}{2}.$$

Ferner ergibt sich damit ebenfalls

$$r = \frac{MK}{2}.$$

Nach Einsetzen, Kürzen, Wurzelziehen und Umstellen ergibt sich folgende Formel für ein optimierbares Betragsverhältnis der Drehgeschwindigkeiten:

$$i \approx 1 \pm \sqrt{\frac{SW + 2r}{2r}} = \sqrt{\frac{SW + MK}{MK}}.$$

Relevant ist nur die positive Lösung, also das Plus-Zeichen, weil der Wurzelterm immer > 1 ist. Die negative Lösung existiert theoretisch auch, ist aber technologisch wenig sinnvoll. Sie führt zu sehr großen Varianzen des Spanwinkels und des Freiwinkels und zu sehr großen Winkelbereichen des Kontakts zwischen Werkstück und Werkzeug. Überdies werden die Schnittgeschwindigkeiten ungünstig klein. Hier wird daher nur noch die positive Lösung betrachtet.

Wenn man sich von dieser Formel ausgehend von der Vorstellung des Standes der Technik löst, das entsprechend einem konkreten Mehrkantprofil nur ganz bestimmte Übersetzungsverhältnisse möglich sind (vgl. zitierte Quelle, Seite 2, rechte Spalte, unten), kommt man zu wesentlich verbesserten Lösungen. Wenn man zum Beispiel für einen Messerkopfdurchmesser MK von 40 mm und eine typische fertige Schlüsselweite SW von 17 mm die beschriebene Formel ausrechnet, kommt man auf ein ideales Betragsverhältnis von $i = 2{,}1937$, also knapp 10 % mehr als die im Stand der Technik übliche 2.

Die Anforderung der regelmäßigen Wiederholung der Bearbeitung, die im Stand der Technik (vgl. zitierte Quelle) zu ganzzahligen bzw. insbesondere bei ungeradzahligen Mehrkantprofilen auch sehr einfachen rationalen Verhältnissen geführt hat (also mit kleinen natürlichen Zahlen als Zähler und Nenner, vgl. in der zitierten Quelle Tabelle 1 auf Seite 4), also in anderen Worten die Anforderung an eine natürliche Zahl als Produkt aus Werkzeugzahl und Betragsverhältnis, lässt sich trotzdem dadurch erfüllen, dass der Mittelwert des Betragsverhältnisses über eine Wiederholungsperiode dieser Bedingung genügt.

Beim vorliegenden Beispiel kann also während der eigentlichen Berührung zwischen Werkstück und Werkzeug der oben angegebene Wert von $i = 2{,}1937$ (je nach möglicher und beabsichtigter Genauigkeit mehr oder weniger gerundet) eingehalten werden. Während der restlichen Phasen innerhalb einer Wiederholungsperiode, in denen sich das Werkstück und das Werkzeug ohnehin nicht berühren und die für die Genauigkeit der Bearbeitung nicht ausschlaggebend sind, kann das Betragsverhältnis $i$ in kompensierender Weise auf einen Wert von zum Beispiel unter 2 abgesenkt werden. Im Mittelwert über die Wiederholungsperiode ergibt sich dann zum Beispiel der gewünschte Wert von 2.

In diesem Zusammenhang ist für die Veranschaulichung hilfreich, daran zu erinnern, dass die Phasen des eigentlichen Kontakts zwischen Werkstück und Werkzeug in vielen praktischen Fällen, so auch in dem hier betrachteten Beispiel, vergleichsweise kurz sind. Dies äußert sich auch in der Annahme kleiner Winkel bei der Linealisierung des Sinus in der zitierten Quelle. Es bleiben also ausreichend Phasen der Gesamtbewegung übrig, um den gewünschten Mittelwert zu erreichen.

Im Übrigen bezieht sich die Formulierung "während der Bearbeitung" im Anspruch 1 auf die ganze Wiederholungsperiode, aber nur solche, in denen es überhaupt zu einem Kontakt zwischen Werkzeug und Werkstück kommt. Während Drehbewegungen ganz ohne solchen Kontakt ist die Erfindung natürlich nicht relevant.

Im Übrigen können wesentliche Verbesserungen schon erreicht werden, wenn von den konventionellen Zahlenwerten für i (vgl. in der Anlage die Tabelle 1) während der wirklichen Berührung zwischen Werkstück und Werkzeug "in die gewünschte Richtung" abgewichen wird, ohne dass dabei der idealisierte i-Wert genau erreicht wird. Zum Beispiel würde schon bei einem Zahlenwert für i über 2, aber noch deutlich unter 2,1937, eine Verbesserung erreicht. Ob im Einzelfall wirklich gewünscht ist, den idealisierten Wert im Rahmen der Möglichkeiten anzunähern, hat neben den tatsächlichen Anforderungen an die Bearbeitungsgenauigkeit auch damit zu tun, welche Variationen des i-Werts gewünscht oder machbar sind. Zum Beispiel könnte es mit Rücksicht auf die Vermeidung zu großer Beschleunigungen oder Schwingungen sinnvoll sein, einen Zahlenwert zwischen 2 und 2,1937 zu wählen, der einerseits eine ausreichende Genauigkeitsverbesserung und andererseits geringere Variationen des i-Werts als bei einem idealisierten i-Wert in der Kontaktphase liefert.

Die Erläuterungen in dem beiliegenden Beitrag der Firma Index beziehen sich auf plane Flächen, also auf das Mehrkantdrehen. Deswegen kann dort auf S. 2 oben rechts die erste Ableitung dx/dt = 0 gesetzt werden. Das ist zwar praktisch ein sehr bedeutsamer Anwendungsfall, aber nicht zwingend und insbesondere nicht beschränkend für die Erfindung. An dieser Stelle könnte auch eine andere geometrische Randbedingung einfließen, z. B. eine gewünschte Balligkeit oder Hohlförmigkeit (bzw. Konvexität oder Konkavität). Der Index-Beitrag führt im Folgenden näher aus, wie sich bei den dort untersuchten Geschwindigkeits-Betragsverhältnissen i (bzw. $n_2/n_1$) mehr oder weniger ausgeprägte Balligkeiten oder Hohlförmigkeiten im Sinn einer Abweichung vom Ideal ergeben, vgl. den Text auf S. 3 und Tabelle 1 auf S. 4 oben links. Es könnte aber z. B. zur Optimierung der Drehmomentaufnahme gewünscht sein, eine bestimmte Hohlförmigkeit zu erreichen. Letztlich ist das eine Frage der individuellen Zielvorgaben; die Grundidee der Erfindung jedenfalls lässt es auch in diesem Zusammenhang zu, in der Kontaktphase zwischen Werkzeug und Werkstück eine gewünschte Geometrie durch individuelle Vorgabe des Parameters i einzustellen.

Ferner ist klarzustellen, dass die bisherigen Erläuterungen mit der Kopplung zweier Rotationsbewegungen und die Darstellung in dem beiliegenden Stand der

Technik letztlich auf die endgültige gewünschte Profilform bezogen sind, die Herstellung allerdings bei einer deutlich abweichenden Profilform starten wird, insbesondere bei einer Vollkreisform. Bei der graduellen und iterativen Bearbeitung wird den beiden Rotationsbewegungen zusätzlich eine Translationsbewegung überlagert. In dem beiliegenden Stand der Technik bedeutet das, dass dort der Parameter a allmählich verkleinert wird. Da in den Bearbeitungsphasen vor der letztlichen Annäherung an das gewünschte Profil natürlich mehr Spielraum besteht, müssen in diesen Phasen die dargelegten kinematischen Vorgaben auch nicht streng befolgt werden. Es ist allerdings praktisch und vorteilhaft, den Vorgaben schon zuvor zu folgen und nicht erst in einer Schlussphase der Bearbeitung; die Erläuterung dieser Zusammenhänge dient eher der Veranschaulichung der Allgemeinheit der Erfindung.

Ferner können grundsätzlich durch Einbeziehung der den beiden Rotationsbewegungen überlagerten Relativbewegung zwischen Werkzeug und Werkstück (in der Regel Werkzeugannäherung) auch Besonderheiten dieser Rotationsbewegungen kompensiert werden, wobei das im Regelfall zu nachteiligen Verkomplizierungen führt. Es soll nur verdeutlicht werden, dass die Erfindung nicht auf die beschriebene Idealisierung der Bewegungen (gemäß Anlage) und auch nicht darauf eingeschränkt ist, dass das Produkt aus Messerzahl und i-Wert eine natürliche Zahl ist.

Wie bereits erwähnt, ist die Erfindung grundsätzlich für alle Bearbeitungsverfahren geeignet, bei denen Material abgetragen wird, und ist der Begriff des Schlagdrehens in diesem Sinn als Bezugnahme auf eine bestimmte Kinematik und nicht als Bezugnahme auf das Drehen oder die Verwendung von für das Drehen typischen Werkzeugen gedacht. Allerdings ist die spanabhebende Bearbeitung natürlich der bevorzugte Anwendungsfall, und insbesondere der Einsatz von klassischen Drehwerkzeugen, wie sie auch zuvor für das Schlagdrehen eingesetzt wurden.

Bevorzugt ist ferner in der Tat auch die Herstellung zumindest einer planen Fläche, wobei durch die erfindungsgemäße Variation des Betragsverhältnisses die Abweichungen von der Planarität verringert werden sollen, also im Vergleich zu einer konventionellen Schlagdreh-Bearbeitung mit zeitlich konstantem Betragsverhältnis entsprechend dem Mittelwert über eine Wiederholungsperiode.

Die Herstellung zumindest einer planen Fläche ist nicht zwingend gleichbedeutend mit dem Mehrkant-Schlagdrehen, wenngleich der beiliegende Index-Beitrag in Tabelle 1 (S. 4 oben links) auch den Fall einer einzelnen planen Fläche an einem ansonsten kreisrunden Querschnittsprofil auflistet. Die Herstellung zumindest einer planen Fläche impliziert auch nicht, dass das restliche Profil kreisrund ist. Allerdings sind natürlich solche Fälle wichtig und auch bevorzugt. Insbesondere ist auch das Mehrkant-Schlagdrehen in dem Sinn einer Herstellung einer Mehrzahl, vorzugsweise einer geraden Zahl und besonders bevorzugterweise von Sechskantflächen bevorzugt.

Wie das oben stehende Beispiel mit dem Schritt von i = 2 zu i = 2,1937 zeigt, können die Abweichungen des Betragsverhältnisses vom Mittelwert über eine Periode durchaus erheblich sein. Grundsätzlich liegen diese Abweichungen natürlich über den im Einzelfall typischen Werten infolge maschineller Ungenauigkeiten, Schwingungen etc., also außerhalb unbeabsichtigter Fehler. Mit anderen Worten richtet sich die Erfindung auf Abweichungen des i-Werts vom Mittelwert über eine Periode, die unter Berücksichtigung der technischen Umstände bewusst realisiert sind.

Ferner sind die beiden diskutierten Drehbewegungen in dem diskutierten Bezugssystem vorzugsweise gleichsinnig. Dementsprechend bewegen sich der Außenumfang des gerade bearbeiteten Querschnittsprofils und das Werkzeug an den Kontaktstellen gegeneinander. Dies setzt auch der beiliegende Index-Artikel voraus; es ist aber nicht zwingend. Die gleichsinnigen Drehbewegungen erlauben jedenfalls erstens sinnvolle kinematische Lösungen und zweitens bei bestimmten vorgegebenen Bereichen für die Schnittgeschwindigkeit oder Schleifgeschwindigkeit begrenzte Beträge der einzelnen Drehgeschwindigkeiten.

Ferner ist vorzugsweise die Werkzeugdrehgeschwindigkeit größer als die Werkstückdrehgeschwindigkeit, was dazu führt, dass eine Mehrzahl Stellen an einem Werkzeug bzw. eine Mehrzahl Einzelwerkzeuge an einem die Werkzeuge tragenden Rad oder einer Walze oder Ähnlichem entlang dem Außenumfang des Werkstücks zum Einsatz kommen.

Schließlich ist vorzugsweise eine der beiden Drehgeschwindigkeiten konstant und wird nur die jeweils andere gemäß der Erfindung variiert. Da es für die Erfindung auf das Geschwindigkeitsverhältnis ankommt, ist auch dies nicht zwingend. In den meisten Fällen ist der "Messerkopf" deutlich masseärmer als das Werkstück mit seiner Halterung, sodass es bevorzugt sein kann, ausschließlich (oder vorwiegend) die Werkzeugdrehgeschwindigkeit zu variieren. Es könnte aber auch in Betracht kommen, beide Drehbewegungen zu variieren, um die auftretenden Beschleunigungen insgesamt kleiner zu halten (also zu verteilen). In der Praxis mag das aber bei einem großen Zahlenverhältnis der Masse des Werkstücks mit Halterung relativ zur Masse des Werkzeugs mit Halterung den Aufwand nicht rechtfertigen.

Ferner wurde im Bezug auf den Stand der Technik schon erläutert, dass die dort idealisierten Betragsverhältnisse ganzzahlig oder Brüche aus kleinen natürlichen Zahlen von unter 10 sind. Für die Erfindung gilt das vorzugsweise für den Mittelwert, wobei ebenfalls vorzugsweise das Produkt mit den zur Bearbeitung anstehenden Stellen am Werkzeug oder der Zahl der Einzelwerkzeuge eine natürliche Zahl ist.

Die bereits beschriebene Herleitung des Werts i = 2,1037 führt auf die bereits erwähnte Formel

$$i \approx 1 \pm \sqrt{\frac{SW + 2r}{2r}},$$

die auch unabhängig von den konkreten Zahlenwerten für die Schlüsselweite und den Radius gilt. Für die Schlüsselweite SW kann auch allgemein der verdoppelte Radius einer gewünschten Profilfläche gesetzt werden, insbesondere bei einer einzelnen Profilfläche bzw. einer einzelnen planen Fläche.

Diese Formel gilt natürlich je nach Anwendungsfall mit einer begrenzten Genauigkeit, wobei die wesentliche Fehlerquelle in der Regel die Linearisierung des Sinus ist. Im Regelfall ist allerdings eine genauere quantitative Betrachtung (mit numerischen Verfahren) ohne diese Linearisierung nicht sehr hilfreich, weil andere Effekte die Genauigkeitsgrenzen der Bearbeitung bestimmen. In Betracht kommen z. B. Schwingungen der Achsen, des Werkzeugs oder Werkstücks und v. a. Gleichlaufschwankungen aufgrund des Eintauchens bzw. der Kontaktaufnahme zwischen Werkzeug und Werkstück. Ferner wurde bereits daraufhingewiesen, dass Verbesserungen selbst dann erreicht werden können, wenn man die im Prinzip mögliche Annäherung an den idealen i-Wert bewusst nicht vollständig ausnutzt, sondern etwa mit Rücksicht auf Aspekte wie Schwingungen davon bewusst abweicht und die resultierende Restungenauigkeit in Kauf nimmt.

Aus diesen Gründen ist innerhalb einer gewissen Toleranzbreite um einen gewünschten Wert des Parameters i (von z. B. 2,1937) auch eine Diskussion darüber nur begrenzt sinnvoll, ob dieser Parameter i während der Kontaktphase konstant ist oder nicht. Letztlich gibt man je nach Leistungsfähigkeit der eingesetzten Gerätschaften sozusagen eine gewisse Streifenbreite um den Wunschwert des Parameters i vor und soll der reale Verlauf von i innerhalb dieses Streifens bleiben. Es ist also insoweit durchaus möglich und durchaus auch bevorzugt, für den Parameter i während der gesamten Wiederholungsperiode einen sich kontinuierlich und beständig ändernden Verlauf vorzusehen, z. B. einen Sinusverlauf. Man könnte dann eine Extremwertumgebung des Sinusverlaufs in die Kontaktphasen legen und den Sinus um einen geeigneten Mittelwert pendeln lassen.

Letztlich hängt das auch davon ab, wie die Erfindung realisiert wird. In Betracht kommen bevorzugt numerische Steuerungen, also konkret sogenannte CNC-Werkzeugmaschinen, wobei vorzugsweise Servomotoren eingesetzt werden. Allerdings kann die Erfindung grundsätzlich auch anders realisiert werden, z. B. über unrunde Zahnräder, Gelenkwellen, Kurvenscheiben etc.

Die vorstehende Erläuterung des Verfahrens bezieht sich gleichermaßen auch auf die Einrichtung einer geeigneten Vorrichtung, an der ein Werkzeug und ein Werkstück montiert werden können und die entsprechende Relativbewegung erzeugt werden kann. Die Einrichtung der Vorrichtung bedeutet dabei, dass die Schlagdreh-Vorrichtung eine entsprechend programmierte (nicht etwa nur abstrakt programmierbare) Steuerung aufweist bzw. ein entsprechendes Programm verfügbar ist oder eine externe Steuerung (ein Industriecomputer) mit einem entsprechenden Programm verfügbar ist. Die Erfindung bezieht sich schließlich auch auf die Verwendung einer CNC-Werkzeugmaschine für das beschriebene Verfahren und die beschriebene Vorrichtung, und zwar unter optionalem Einschluss der erläuterten optionalen Merkmale.

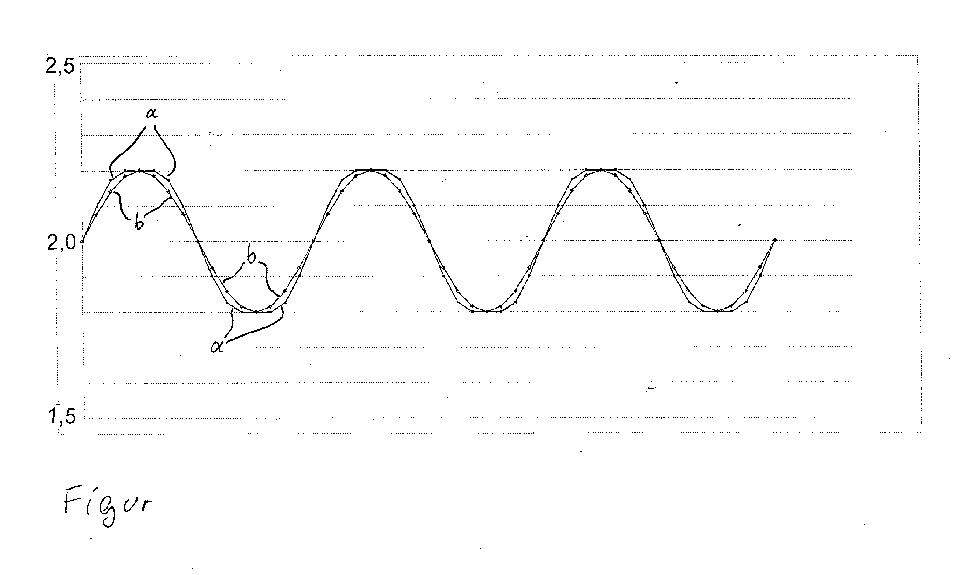

Im Folgenden wird die Erfindung anhand eines Ausführungsbeispiels näher erläutert, wobei auf die einzige Figur verweisen wird.

Die Figur zeigt ein Diagramm mit zwei periodischen Kurven a und b. Bei der Kurve b handelt es sich um eine Sinuskurve mit einem zeitlichen Mittelwert von 2 auf der vertikalen Achse. Die Einheiten auf der horizontalen Achse sind beliebig und stellen lediglich die Zeitachse dar. Die Sinuskurve oszilliert um $\pm$ 0,2 um ihren Mittelwert. Die Kurve A entspricht dem, wobei aber die Kurve im Bereich der Extremwerte etwas verbreitert ist, also statt des "punktförmigen" Extremwerts der Sinuskurve ein Plateau aufweist. Die Kurven sind also geeignet für die Herstellung eines Sechskants mit Schlüsselweite 17 mm bei einem Messerkopfdurchmesser vom 40 mm.

Beide Kurven stellen die zeitliche Variation des ausführlich erläuterten Betragsverhältnisses der Drehgeschwindigkeiten i bei einer einschlägigen CNC-Werkzeugmaschine zum Schlagdrehen dar. Die Kurven werden realisiert durch numerische Programmierung und durch Variation der Drehgeschwindigkeit des Messerkopfs bei konstanter Drehgeschwindigkeit der Werkstückhalterung. Der i-Wert erreicht in der Umgebung der Maxima den Wert 2,2 und ist dort bei Kurve a verbreitert. Die dazu antisymmetrische Verbreiterung der Minima ist technisch nicht nötig und nur aus Gründen der Einfachheit bei der Kurvenerzeugung gegeben. Eine solche Kurve kann zum Beispiel durch "Zerschneiden" einer Sinuskurve an den Extremwerten, leichte Stauchung der erhaltenen Stücke in horizontaler Richtung und Einfügen zum Beispiel gerader Zwischenstücke erreicht werden, was bei einer numerischen Steuerung unproblematisch ist. Wenn ein analytischer Ausdruck bevorzugt ist, auch um eine Wertetabelle für eine numerische Steuerung zu erzeugen, kann zum Beispiel eine Fourierreihe verwendet werden, zum Beispiel die Überlagerung einer Sinuskurve (b) mit einer weiteren Sinuskurve mit verdreifachter Frequenz. Grundsätzlich ist die Fourieranalyse allgemein bekannt und findet der Fachmann auch anspruchsvollere Fourierannäherungen für den vorliegenden Zweck.

Es kann aber auch ausreichend sein, mit einer einfachen Sinusfunktion wie der Kurve b zu arbeiten, die natürlich wieder so eingerichtet wird, dass die tatsächliche Berührung zwischen Werkzeug und Werkstück in der direkten Umgebung der Maxima stattfindet. In diesen Teilen ist die Sinuskurve b ohnehin relativ flach. Sie lässt sich einfach erzeugen und begrenzt die Beeinträchtigungen der Vorrichtung durch Schwingungen.

In beiden Fällen a und b ist eine zur horizontalen Linie beim Wert 2 symmetrische Kurvenform die einfachste Möglichkeit, den Mittelwert bei 2 festzulegen, aber natürlich nicht die einzige.

Im Übrigen wird auf die beiliegende Darstellung aus "Der Maschinenmarkt" hingewiesen, und zwar insbesondere auf die die Bearbeitung illustrierenden Figuren auf Seite 2. Der Inhalt dieser Anlage soll ausdrücklich Bestandteil der vorliegenden Anmeldung sein.

## Patentansprüche

1. Verfahren zum Schlagdrehen,
bei dem ein Werkzeug in einem kinematischen Bezugssystem um eine erste Achse gedreht wird, gleichzeitig ein Werkstück in dem Bezugssystem um eine zweite, von der ersten Achse entfernte Achse gedreht wird,
wobei das Werkzeug das Werkstück in bestimmten Kontaktphasen der sich aus der Kombination der beiden Drehbewegungen ergebenden Relativbewegung bearbeitet,
**dadurch gekennzeichnet, dass** während der Bearbeitung das Betragsverhältnis der jeweils gleichzeitigen Drehgeschwindigkeiten der beiden Drehbewegungen innerhalb einer Wiederholungsperiode der sich aus der Kombination der Drehbewegungen ergebenden Relativbewegung nicht-monoton variiert.

2. Verfahren nach Anspruch 1, bei dem das Werkzeug ein spanabhebendes Werkzeug und die Werkstückbearbeitung eine spanabhebende Bearbeitung ist.

3. Verfahren nach einem der vorstehenden Ansprüche, bei dem zumindest eine plane Fläche an dem Werkstück hergestellt werden soll und die Variation des Betragsverhältnisses der Drehgeschwindigkeiten so ausgelegt ist, dass die Abweichung der Fläche von einer idealen Planarität geringer ist als bei einer gedachten analogen Bearbeitung, jedoch mit zeitlich konstantem Betragsverhältnis der Drehgeschwindigkeiten, und zwar entsprechend dem Mittelwert des variierenden Betragsverhältnisses über eine Wiederholungsperiode der kombinierten Bewegung.

4. Verfahren nach Anspruch 3, bei dem die Werkstückbearbeitung ein Mehrkant-Schlagdrehen ist.

5. Verfahren nach einem der vorstehenden Ansprüche, bei dem die Variation des Betragsverhältnisses der Drehgeschwindigkeiten mindestens 1 % beträgt.

6. Verfahren nach einem der vorstehenden Ansprüche, bei dem die beiden Drehbewegungen in dem Bezugssystem den gleichen Drehsinn haben.

7.  Verfahren nach einem der vorstehenden Ansprüche, bei dem die Werkzeugdrehgeschwindigkeit größer ist als die Werkstückdrehgeschwindigkeit.

8.  Verfahren nach einem der vorstehenden Ansprüche, bei dem die Werkstückdrehgeschwindigkeit oder die Werkzeugdrehgeschwindigkeit konstant ist.

9.  Verfahren nach Anspruch 3, optional auch in Kombination mit einem weiteren der vorstehenden Ansprüche, bei dem das Betragsverhältnis im Mittelwert über eine Wiederholungsperiode eine rationale Zahl ist, deren Nenner und deren Teiler jeweils höchstens 10 betragen, vorzugsweise 2 ist.

10. Verfahren nach Anspruch 4, optional auch in Kombination auch mit einem weiteren der vorstehenden Ansprüche, bei dem das Betragsverhältnis i beträgt:

$$i \approx 1 + \sqrt{\frac{SW + r}{r}}$$

wobei SW eine Schlüsselweite des herzustellenden Mehrkantprofils und r der effektive Radius der Bearbeitungskante des Werkzeugs bei dessen Drehbewegung ist.

11. Verfahren nach einem der vorstehenden Ansprüche, bei dem das Betragsverhältnis eine stets variierende Funktion der Zeit ist.

12. Verfahren nach einem der vorstehenden Ansprüche, bei dem die Variation des Betragsverhältnisses realisiert wird über eine numerische Steuerung, insbesondere unter Zuhilfenahme von Servomotoren.

13. Vorrichtung zum Schlagdrehen mit
    einer Einrichtung zum Montieren eines Werkzeugs und
    einer Einrichtung zum Montieren eines Werkstücks und
    einer Einrichtung zum Erzeugen einer Relativbewegung des Werkzeugs und Werkstücks relativ zueinander,
    welche Vorrichtung eingerichtet ist für ein Verfahren nach einem der vorstehenden Ansprüche.

14. Vorrichtung nach Anspruch 13 mit einer programmierbaren Steuerung, die gemäß einem der Ansprüche 1 bis 12 programmiert ist.

15. Verwendung einer CNC-Werkzeugmaschine für ein Verfahren nach einem der Ansprüche 1 bis 12 oder eine Vorrichtung nach Anspruch 13 oder 14.

Figur

**Europäisches Patentamt**
**European Patent Office**
**Office européen des brevets**

# EUROPÄISCHER RECHERCHENBERICHT

Nummer der Anmeldung

EP 15 16 4505

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 590 283 A1 (WITTE HORST ENTWICKLUNG [DE]) 6. April 1994 (1994-04-06) * Spalten 2,3; Abbildungen 1-4 * ----- | 1-9,11, 13 | INV. B23B5/36 B23Q27/00 |
| X | EP 0 294 565 A1 (WERNER HERMANN WERA WERKE [DE]) 14. Dezember 1988 (1988-12-14) * Spalten 2-4; Abbildungen 1-3 * | 1,2,7-9, 12-15 | |
| Y | | 10 | |
| Y | DATABASE WPI Week 198322 1983 Thomson Scientific, London, GB; AN 1983-H4211K XP002744979, -& SU 946 804 A1 (NOVOPOLOTSK POLY) 30. Juli 1982 (1982-07-30) * Zusammenfassung; Abbildung 1 * ----- | 10 | |

RECHERCHIERTE SACHGEBIETE (IPC)

B23B
B23C
B23Q

Der vorliegende Recherchenbericht wurde für alle Patentansprüche erstellt

| Recherchenort | Abschlußdatum der Recherche | Prüfer |
|---|---|---|
| Den Haag | 24. September 2015 | Lorence, Xavier |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................................
& : Mitglied der gleichen Patentfamilie, übereinstimmendes
    Dokument

EPO FORM 1503 03.82 (P04C03)

# EP 3 085 477 A1

## ANHANG ZUM EUROPÄISCHEN RECHERCHENBERICHT
## ÜBER DIE EUROPÄISCHE PATENTANMELDUNG NR.

EP 15 16 4505

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-09-2015

| Im Recherchenbericht angeführtes Patentdokument | Datum der Veröffentlichung | Mitglied(er) der Patentfamilie | Datum der Veröffentlichung |
|---|---|---|---|
| EP 0590283 A1 | 06-04-1994 | DE 9211772 U1<br>EP 0590283 A1 | 13-01-1994<br>06-04-1994 |
| EP 0294565 A1 | 14-12-1988 | DE 3718261 A1<br>EP 0294565 A1<br>ES 2026962 T3<br>JP S63312012 A<br>US 4883392 A | 15-12-1988<br>14-12-1988<br>16-05-1992<br>20-12-1988<br>28-11-1989 |
| SU 946804 A1 | 30-07-1982 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FINGERLE, RUDOLF.** Das Mehrkantdrehen - Grundlagen und Problematik. *Sonderdruck aus ''Der Maschinenmarkt,* April 1961, vol. 67 (28